(19) Europäisches Patentamt
European Patent Office
Office européen des brevets

(11) Publication number: **0 136 068**
**B1**

(12) # EUROPEAN PATENT SPECIFICATION

(45) Date of publication of patent specification: **20.07.88**

(51) Int. Cl.$^4$: **C 01 B 33/28**, B 01 J 29/34

(21) Application number: **84305729.0**

(22) Date of filing: **22.08.84**

(54) **Tailoring acid strength of ZSM-12.**

(30) Priority: **29.08.83 US 527610**

(43) Date of publication of application:
**03.04.85 Bulletin 85/14**

(45) Publication of the grant of the patent:
**20.07.88 Bulletin 88/29**

(84) Designated Contracting States:
**BE DE FR GB IT NL SE**

(56) References cited:
**EP-A-0 013 630**
**FR-A-2 130 429**

(73) Proprietor: **MOBIL OIL CORPORATION**
**150 East 42nd Street**
**New York New York 10017 (US)**

(72) Inventor: **Kuehl, Guenter Hinrich**
**1956 Cardinal Lake Drive**
**Cherry Hill, N.J. 08003 (US)**

(74) Representative: **Carpmael, John William Maurice et al**
**CARPMAELS & RANSFORD**
**43 Bloomsbury Square**
**London, WC1A 2RA (GB)**

**EP 0 136 068 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method for tailoring the acid strength of a synthetic crystalline siliceous molecular sieve material having the structure of ZSM-12, to the tailored synthetic material resulting from said method and to the use of said tailored synthetic material as a catalyst component for catalytic conversion of organic compounds.

Zeolitic materials, both natural and synthetic, have been demonstrated in the past to have catalytic properties for various types of hydrocarbon conversion. Certain zeolitic materials are ordered, porous crystalline aluminosilicates hving a definite crystalline structure as determined by X-ray diffraction, within which there are a large number of smaller cavities which may be interconnected by a number of still smaller channels or pores. These cavities and pores are uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as rigid three-dimensional frameworks of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example an alkali metal or an alkaline earth metal cation. This can be expressed wherein the ratio of aluminum to the number of various cations, such as Ca/2, Sr/2, Na, K or Li, is equal to unity. One type of cation may be exchanged either entirely or partially with another type of cation utilizing ion exchange techniques in a conventional manner. By means of such cation exchange, it has been possible to vary the properties of a given aluminosilicate by suitable selection of the cation. The spaces between the tetrahedra are occupied by molecules of water prior to dehydration.

Prior art techniques have resulted in the formation of a great variety of synthetic aluminosilicate zeolites. The zeolites have come to be designated by letter or other convenient symbols, as illustrated by zeolite A (U.S. Patent 2,882,243), zeolite X (U.S. Patent 2,882,244), zeolite Y (U.S. Patent 3,130,007), zeolite ZK-5 (U.S. Patent 3,247,195), zeolite ZK-4, (U.S. Patent 3,314,752), zeolite ZSM-5 (U.S. Patent 3,702,886), zeolite ZSM-11 (U.S. Patent 3,709,979), zeolite ZSM-12 (U.S. Patent 3,832,449), zeolite ZSM-20 (U.S. Patent 3,972,983), zeolite ZSM-35 (U.S. Patent 4,016,245), zeolite ZSM-38 (U.S. Patent 4,046,859), and zeolite ZSM-23 (U.S. Patent 4,076,842) merely to name a few.

Crystalline iron-containing silicate having the structure of zeolite ZSM-5 is claimed in U.S. Patent 4,208,305. U.S. Patent 4,238,318 claims use of the iron-containing silicate of U.S. Patent 4,208,305 as catalyst component for preparing aromatic hydrocarbons from feedstock comprising acyclic organic compounds such as methanol. Crystalline iron-containing silicates are used in U.S. Patent 4,244,807 for reforming and in U.S. Patent 4,329,233 for purifying water.

The present invention provides a means for tailoring the acid strength of a synthetic crystalline siliceous molecular sieve material having the structure of zeolite ZSM-12. In particular, the present invention involves synthesizing said zeolite in a particular fashion to include both aluminum and iron in its anionic framework, i.e. preparation of ferroaluminosilicate of ZSM-12 structure containing tetrahedrally coordinated aluminum and iron, within certain compositional limits. The present invention is also directed to the tailored zeolite so synthesized, as well as to its use in catalytic conversion of organic, e.g. hydrocarbon, compounds.

In its zeolite synthesis method aspect, the present invention comprises preparing a mixture containing a source of organic cations, a source of silicon, a deliberately-added source of aluminum, a source of iron, a source of alkali metal or alkaline earzh metal ions and water, with such a mixture having a particular composition in terms of mole ratios of oxides and ions; maintaining the mixture until crystalline siliceous molecular sieve material is formed at a temperature of from 100°C to 200°C for a time of from 30 hours to 40 days; and recovering from the mixture a particular type of crystalline siliceous molecular sieve material. The components of the reaction mixture used to form the molecular sieve material are present in the following ratios:

| | |
|---|---|
| $OH^-/SiO_2$ | 0.05—0.7 |
| $H_2/OH^-$ | 50—250 |
| $SiO_2/Al_2O_3$ | 30—50,000 |
| $SiO_2/Fe_2O_3$ | 30—3,000 |
| Q/(Q+M) | 0.2—0.9 |
| (Q+M)/(Al+Fe) | 10—150 |

wherein Q represents organic cations and M represents alkali metal or alkaline earth metal ions. The crystalline molecular sieve material recovered from the mixture is characterized by an X-ray diffraction pattern substantially as shown in Table 1 set forth hereinafter, and by a composition on an anhydrous basis and in terms of moles of oxides per mole of silica expressed by the formula:

$$a\ R_{2/n}O:b\ Fe_2O_3:cAl_2O_3:SiO_2$$

wherein R is at least one cation having the valence n and

a=(1.0±0.2)(b+c)
b=0.0005—0.05, and
c=0.00003—0.02.

Such molecular sieve material also exhibits, when in the ammonium form, a temperature-programmed ammonia desorption peak of from greater than 310°C to less than 370°C and a temperature-programmed ammonia desorption peak half-height width of from greater than 120°C to less than 160°C.

In other aspects, the present invention relates to the particular crystalline molecular sieve material per se recovered from the reaction mixture, to catalyst compositions containing such molecular sieve material and to the catalytic use of such molecular sieve material for the conversion of organic compounds. The catalyst compositions herein, for example, can contain from 1 percent to 90 percent by weight of the crystalline molecular sieve material and from 10 percent to 99 percent by weight of an inorganic oxide matrix material.

The acid strength-tailored crystalline ferroaluminosilicate of this invention is a unique composition of matter which exhibits a valuable combination of catalytic and hydrophilic properties which distinguishes it from known aluminosilicates of ZSM-12 structure and iron-containing silicates of any known structure.

The ferroaluminosilicate material of the present invention will exhibit unique and useful catalytic, sorptive and shape selective properties along with a silica-alumina mole ratio of as high as about 30,000. Preferably such metals have silica/alumina mole ratios less than 600, more preferably less than 500. It is known that catalytic activity and hydrophilic properties of aluminosilicates decrease with increased silica/alumina mole ratios. It is also known that certain aluminosilicates, e.g. Mordenite, Beta and ZSM-35, become more difficult to synthesize as the mole ratio of silica/alumina in the crystallization mixture is increased.

The ferroaluminosilicate molecular sieve material prepared by the method of this invention overcomes the potential problems associated with high silica/alumina mole ratio aluminosilicates and with borosilicates in that the present material exhibits a unique tailored acid strength and hydrophilic properties distinguishing it from known aluminosilicates. Zeolite ZSM-12 is more particularly described in U.S. Patent 3,832,449.

The original alkali metal or alkaline earth metal cations of the as synthesized acid strength-tailored ferroaluminosilicate can be replaced in accordance with techniques well known in the art, at least in part, by ion exchange with other cations. Preferred replacing cations include metal ions, hydrogen ions, hydrogen precursor, e.g., ammonium ions and mixtures thereof. Preferred metal cations include rare earth metal and metals of Groups IA, IIA, IIIA, IVA, IB, IIB, IIIB , IVB and VIII of the Periodic Table of the Elements (Sargent-Welch Scientific Company, 1979).

Typical ion exchange technique would be to contact the synthetic ferroaluminosilicate with a salt of the desired replacing cation or cations. Examples of such salts include the halides, e.g. chlorides, nitrates and sulfates.

The acid-strength tailored zeolite of the present invention can be beneficially thermally treated, either before or after ion exchange. This thermal treatment is performed by heating the zeolite in an atmosphere such as air, nitrogen, hydrogen, steam, etc, at a temperature of from about 370°C to about 1100°C for from about 1 minute to about 20 hours. While subatmospheric or superatmospheric pressures may be used for this thermal treatment, atmospheric pressure is desired for reasons of convenience. It may be desirable in certain instances to conduct this thermal treatment at from about 370°C to about 750°C, but the structure of the acid-strength tailored zeolite hereof should be stable up to about 1100°C.

Zeolite ZSM-12 exhibits a definite X-ray diffraction which distinguishes it from other zeolites. The X-ray diffraction pattern of the ferroaluminosilicate of the prssent invention having the structure of zeolite ZSM-12 has the following characteristic values:

TABLE 1

| Interplanar d-Spacing (Å) | Relative intensity, $I/I_o$ |
|---|---|
| 11.9±0.2 | m |
| 10.1±0.2 | m |
| 4.76±0.1 | w |
| 4.26±0.08 | vs |
| 3.98±0.08 | w |
| 3.89±0.07 | s |
| 3.47±0.07 | m |
| 3.40±0.07 | m |
| 3.20±0.06 | w |
| 3.06±0.05 | w |
| 2.52±0.03 | w |

These X-ray diffraction data were collected with the Philips APD-3600 X-ray system, using copper K-alpha radiation. The positions of the peaks, expressed in degrees 2 theta, where theta is the Bragg angle, were determined by step-scanning at 0.02 degrees of 2 theta intervals and a counting time of 2 seconds for each step. The interplanar spacings, d, measured in Angstrom units (Å), and the relative intensities of the lines, $I/I_o$, where $I_o$ is one-hundredth of the intensity of the strongest line, including subtraction of the background, were derived with the use of the software "APD Peak Algorithm". The relative intensities are given in terms of the symbols vs=very strong, s=strong, m=medium and w=weak. It should be understood that this X-ray diffraction pattern is characteristic of all the species of zeolite compositions synthesized by the present invention. Ion exchange of the alkali metal cations with other ions results in a zeolite which reveals substantially the same X-ray diffraction pattern with some minor shifts in interplanar spacing and variation in relative intensity. Other minor variations can occur, depending on the silica to alumina plus iron oxide ratio and the iron to iron plus aluminum ratio of the particular sample, as well as its degree of thermal treatment.

It is important not to confuse acid activity with acid strength of a particular zeolite. The present invention relates to tailoring the acid strength of a synthetic crystalline molecular sieve material having the structure of zeolite ZSM-12. Acid activity measured by Alpha value can be altered downward by (1) steaming a higher Alpha zeolite, by (2) crystallization of the zeolite with a higher $SiO_2/Al_2O_3$ mole ratio or by (3) crystallization of the zeolite as a metalloaluminosilicate, the metal other than aluminum taking the place of aluminum in the zeolite structure. Method (3) may provide a product zeolite having the same number of acid sites as the product zeolite of method (1), but their acid strength is lower.

Alpha Value correlates with the number of acid sites only when the acid strength of those sites is constant. Conversely, Alpha Value should correlate with the acid strength only when the number of acid sites is constant. It is believed that the product acid-strength tailored zeolite hereof will provide a more selective catalyst than those made by steaming a higher Alpha Value zeolite.

It is noted that the difference in zeolite acid site density is equivalent to the concentration of an aqueous acid solution, e.g. a solution of $H_2SO_4$, which can be titrated. The difference in acid strength is equivalent to difference in pK values of aqueous acids e.g. "strong" acids such as $H_2SO_4$, $HNO_3$ and HCl, "medium strong" acids such as $H_3PO_4$, and "weak" acids such as $H_3BO_3$, $H_2CO_3$ and $H_4SiO_4$, which can be measured by the pH at which these acids are neutralized (titration curve), or, conversely, by the temperature at which the acid releases a volatile base, e.g. $NH_3$, indicating the strength with which the acid holds the base, e.g. as $NH_4^+$.

Zeolite ZSM-12 exhibits an important characteristic of its crystal structure of constrained access to, and egress from, the intracrystalline free space by virtue of having a pore dimension greater than 5 Angstroms and pore windows of about a size such as would be provided by distorted 12-membered rings of oxygen atoms. It is to be understood, of course, that these rings are those formed by the regular disposition of the tetrahedra making up the anionic framework of the crystalline zeolite, the oxygen atoms themselves being bonded to the silicon or aluminum or iron atoms at the centers of the tetrahedra for the ferroaluminosilicate of the present invention. The crystalline ferroaluminosilicate produced hereby exhibiting this characteristic freely sorbs normal hexane and cyclohexane and has a Constraint Index of about 1 to 4.

In general, the ferroaluminosilicate of the present invention can be prepared from a reaction mixture containing a source of cations, such as, for example, organic nitrogen-containing cations, an alkali or alkaline earth metal ion source, a source of silicon, such as, for example, a silicate, a deliberately-added source of aluminum, such as, for example, an aluminate, water and a source of iron, such as, for example, an iron salt. The reaction mixture will have a composition, in terms of mole ratios of oxides, within the following ranges:

| | Broad | Preferred |
|---|---|---|
| $OH^-/SiO_2$ | 0.05—0.7 | 0.1—0.6 |
| $H_2O/OH^-$ | 50—250 | 70—200 |
| $SiO_2/Al_2O_3$ | 30—50,000 | 40—30,000 |
| $SiO_2/Fe_2O_3$ | 30—3,000 | 40—2,000 |
| Q/(Q+M) | 0.2—0.9 | 0.3—0.8 |
| (Q+M)/(Al+Fe) | 10—150 | 15—100 |

wherein Q represents organic cations and M represents alkali metal or alkaline earth metal ions.

Reaction conditions consist of heating the foregoing reaction mixture to a temperature of from about 100°C to about 200°C for a period of time of from about 30 hours to about 40 days. A more preferred temperature range is from about 140°C to about 180°C with the amount of time at a temperature in such range being from about 50 hours to about 25 days.

The digestion of the gel particles is carried out until crystals of the desired ferroaluminosilicate form. The crystalline product is recovered by separating same from the reaction medium, as by cooling the whole to room temperature, filtering and washing at conditions including a pH above 7.

The above reaction mixture composition can be prepared utilizing materials which supply the appropriate oxides. Such compositions may include sodium silicate, silica hydrosol, silica gel, silicic acid,

sodium hydroxide, a deliberately-added source of aluminum, a source of iron and an appropriate organic compound. The source of aluminum will generally be a deliberately-added aluminum-containing compound. Deliberately-added sources of aluminum are those which, in general, comprise significantly more aluminum than other essential reaction mixture components such as silica-containing compounds or alkali metal-containing compounds which may also contain aluminum as an impurity. The source of iron may be an iron salt such as, for example, ferric sulfate.

The organic compounds act as directing agents and contain an element of Group VA, such as nitrogen or phosphorus. A quaternary compound of alkylammonium chloride or hydroxide which provides alkylammonium cations, such as, for example, tetraethylammonium and/or triethylmethylammonium cations may be used to direct synthesis under appropriate conditions of the ferroaluminosilicate having the structure of ZSM-12.

Another way to direct synthesis of the present ferroaluminosilicate molecular sieve having the crystal structure of ZSM-12 is to provide seed crystals of ZSM-12 in the reaction mixture initially. This may be facilitated by providing at least about 0.01 percent, preferably at least about 0.1 percent and still more preferably at least about 1 percent seed crystals of the desired ferroaluminosilicate (based on total reaction mixture weight).

While the present invention is not limited by any particular theory of operation, it should be noted that, depending on the ratio of Si/Al in the crystal framework, the influence of Si-O on th Al-O bond length may be larger or smaller. A shortening of the Al-O bond, as happens as the $SiO_2/Al_2O_3$ ratio increases, results in a stronger acid, but the number of acid sites ($H^+$-ion concentration) decreases. In a framework aluminosilicate, such as a zeolite ZSM-12 synthesized as in U.S. Patent 3,832,449, the acid strength of the proton associated with an $AlO_4^-$ tetrahedron correlates with the Al-O bond length. The longer the bond, the weaker is the acid; the shorter the bond, the stronger is the acid. Since there is a certain narrow range of Al-O bond lengths within a structure, there is a corresponding range of acid strengths.

Information on the relative acid strengths can be obtained by following the desorption of ammonia from an ammonium zeolite upon heating with a constant heating rate, e.g. 10°C/minute. The desorbed ammonia is continually purged from the thermogravimetric unit with helium and absorbed from a gas stream in boric acid/$NH_4Cl$, where it is continuously titrated with sulfamic acid using an automated titrator (G. T. Kerr and A. W. Chester, *Thermochim. Acta.,* 1971, *3,* 113). The rate at which the titrant is added is recorded as a function of the sample temperature. The temperature at which the rate of ammonia evolution reaches a maximum, the temperature-programmed ammonia desorption (TPAD) peak temperature, is a measure of the acid strength of the zeolite acid, since a weaker acid would release $NH_3$ at a lower temperature, a stronger acid at a higher temperature.

Whereas an aluminosilicate ZSM-12 of $SiO_2/Al_2O_3$ molar ratio of 180 shows the TPAD peak at 375°C, a ferroaluminosilicate of ZSM-12 structure having a $SiO_2/(Al_2O_3+Fe_2O_3)$ molar ratio of 125 and a Fe/(Fe+Al) atomic ratio of 0.42 gives a TPAD peak at 360°C.

The widths of the TPAD peaks at half-height for various zeolite samples are measured and found to be 120°C for the aluminosilicate ZSM-12, 120°C for the ferroaluminosilicate sample with Fe/(Al+Fe)=0.42 and 150°C for the ferroaluminosilicate sample containing Fe and Al in the ratio of about 2/1, i.e., Fe/(Al+Fe)=0.65. For comparison, a 1/1 mixture of a ferrosilicate ZSM-12 and an aluminosilicate ZSM-12 gave a TPAD peak at 360°C with a half-height width of 180°C.

It is concluded from these results that the bond lengths of Fe-O and Al-O are modified by their mutual influence in the crystal structure resulting in essentially one common acid strength intermediate of the pure Al- and pure Fe-silicates.

As further illustration of unexpected results, the Alpha activity of the product of Example 4, hererinafter, is lower than would be expected from the Al content. This is also true for the product of Example 6 hereinafter. This unexpected result indicates that the acid strength of the aluminum sites themselves decreased by the presence of the iron in the zeolite structure.

Therefore, the TPAD peak with temperature and half-height width and the Alpha activity indicate that mixed ferroaluminosilicates have acid strength intermediate to ferrosilicate and aluminosilicate, and the acid strength is modified by the mutual effect of the Al-O and Fe-O bonds on their length. This observation allows the conclusion that the acid sites of the presently synthesized acid strength-tailored zeolite do not behave like hydrogen sites on aluminosilicate (stronger) or like hydrogen sites on ferrosilicates (weaker), but a new type of acid site is unexpectedly formed.

The ferroaluminosilicate crystals prepared by the instant invention can be shaped into a wide variety of particle sizes. Generally speaking, the particles can be in the form of a powder, a granule or a molded product, such as an extrudate having particle size sufficient to pass through a 2 mesh (Tyler) screen and be retained on a 400 mesh (Tyler) screen. In cases where the catalyst is molded, such as by extrusion, the crystals can be extruded before drying or partially dried and then extruded.

It may be desired to incorporate the new ferroaluminosilicate crystal with another material, i.e., a matrix material, resistant to the temperatures and other conditions employed in various organic conversion processes. In this manner catalyst compositions can be prepared. Such matrix materials include active and inactive material and synthetic or naturally occurring zeolites as well as inorganic materials such as clays, silica and/or metal oxides, e.g., alumina. The latter may be either naturally occurring or in the form of gelatinous precipitates or gels including mixtures of silica and metal oxides. Use

of a material in conjunction with the new ferroaluminosilicate crystal, i.e. combined therewith, which is active, tends to alter the conversion and/or selectivity of the overall catalyst in certain organic conversion processes. Inactive materials suitably serve as diluents to control the amount of conversion in a given process to that products can be obtained economically and orderly without employing other means for controlling the rate of reaction. These materials may be incorporated into naturally occurring clays, e.g., bentonite and kaolin, to improve the crush strength of the catalyst under commercial operating conditions. Said materials, i.e. clays, oxides, etc., function as binders for the catalyst. It may be desirable to provide a catalyst having good crush strength because in commercial use it is desirable to prevent the catalyst from breaking down into powder-like materials. These clay binders have been employed normally only for the purpose of improving the crush strength of the overall catalyst.

Naturally occurring clays which can be composited with the new crystal include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification. Binders useful for compositing with the present crystal also include inorganic oxides, notably alumina.

In addition to the foregoing materials, the crystalline ferroaluminosilicate can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia silica-alumina-magnesia and silica-magnesia-zirconia. The relative proportions of finely divided crystalline molecular sieve material and inorganic oxide matrix vary widely, with the crystal content ranging from about 1 to about 90 percent by weight and more usually, particularly when the composite is prepared in the form of beads, in the range of about 2 to about 80 weight percent of the composite.

Employing a catalytically active form of the novel ferroaluminosilicate material of this invention as a catalyst component, said catalyst possibly containing additional hydrogenation components, reforming stocks can be reformed employing a temperature of from about 370°C to about 540°C, a pressure of from about 100 psig (791 kPa) to about 1000 psig (6996 kPa), preferably from about 200 psig (1480 kPa) to about 700 psig (4928 kPa), a liquid hourly space velocity of from about 0.1 to about 10, preferably from about 0.5 to about 4, and a hydrogen to hydrocarbon mole ratio of from about 1 to about 20, preferably from about 4 to about 12.

A catalyst comprising the present ferroaluminosilicate molecular sieve can also be used for hydroisomerization of normal paraffins, when provided with a hydrogenation component, e.g. platinum. Such hydroisomerization is carried out at a temperature of from about 90°C to about 375°C, preferably from about 145°C to about 290°C, with a liquid hourly space velocity of from about 0.01 to about 2, preferably from about 0.25 to about 0.50, and with a hydrogen to hydrocarbon mole ratio of from about 1:1 to about 5:1. Additionally, such a catalyst can be used for olefin or aromatic isomerization, employing a temperature of from about 200°C to about 480°C.

Such a catalyst can also be used for reducing the pour point of gas oils. This reaction is carried out at a liquid hourly space velocity of from about 10 to about 30 and at a temperature of from about 425°C to about 595°C.

Other reactions which can be accomplished employing a catalyst comprising the ferroaluminosilicate of this invention containing a metal, e.g. platinum, include hydrogenation-dehydrogenation reactions and desulfurization reactions, olefin polymerization (oligomerization) and other organic compound, conversions, such as the conversion of alcohols (e.g. methanol) or ethers (e.g. dimethylether) to hydrocarbons, and the alkylation of aromatics (e.g. benzene) in the presence of an alkylating agent (e.g. ethylene).

In order to more fully illustrate the nature of the invention and the manner of practicing same, the following examples are presented. In the examples, whenever adsorption data are set forth for comparison of sorptive capacities for water, cyclohexane and n-hexane, they were determined as follows:

A weighed sample of the calcined adsorbant was contacted with the desired pure adsorbate vapor in an adsorption chamber, evacuated to 1 mm and contacted with 12 mm Hg of water vapor or 20 mm Hg of n-hexane, or cyclohexane vapor, pressures less than the vapor-liquid equilibrium pressure of the respective adsorbate at room temperature. The pressure was kept constant (within about $\pm$0.5 mm) by addition of adsorbate vapor controlled by a manostat during the adsorption period, which did not exceed about 8 hours. As adsorbate was adsorbed by the new ferroaluminosilicate material, the decrease in pressure caused the manostat to open a valve which admitted more adsorbate vapor to the chamber to restore the above control pressures. Sorption was complete when the pressure change was not sufficient to activate the manostat. The increase in weight was calculated as the adsorption capacity of the sample in g/100 g of calcined adsorbant.

When Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time). It is based on the activity of the highly active silica-alumina cracking catalyst taken as an Alpha of 1 (Rate Constant=0.016 $sec^{-1}$). In the case of zeolite HZSM-5, only 174 ppm of tetrahedrally coordinated $Al_2O_3$ are required to provide an Alpha Value of 1. The Alpha Test is described in U.S. Patent 3,354,078 and in *The Journal of Catalysis*, Vol.

IV, pp. 522—529 (August 1965). The zeolite tested in this Alpha Test must be in the hydrogen or hydronium form. This may be accomplished by calcination, and contact of the zeolite with an ammonium salt or acid solution followed by calcination, or by calcination of the zeolite if it contains a hydrogen precursor by way of its synthesis.

Example 1

Two grams of ferric nitrate, $Fe(NO_3)_3 \cdot 9H_2O$, was dissolved in 158.6 grams of water. A 50% aqueous solution of triethylmethylammonium chloride, 25.0 grams, and 10.1 grams of a 50% aqueous solution of sodium hydroxide were added. After finally adding 48.0 grams of Hi-Sil (a precipitated hydrated $SiO_2$ containing 90% solids, about 6 weight% free water and about 4.5 weight% bound water of hydration and having a particle size of about 0.02 micron), the reaction mixture was heated at 160°C in a Teflon-lined autoclave for crystallization. The reaction mixture had the following composition:

| | |
|---|---|
| $SiO_2/Al_2O_3$ | 269 |
| $SiO_2/Fe_2O_3$ | 281 |
| Q/(Q+M) | 0.40 |
| (Q+M)/(Al+Fe) | 20.6 |
| $H_2O/OH^-$ | 91 |
| $OH^-/SiO_2$ | 0.16 |

The crystalline product, obtained in 7 days, gave the X-ray diffraction pattern shown in Table 2, hereafter, and had 110% crystallinity compared to a reference sample containing no iron and prepared by the method of European Patent application 18,089.

The chemical composition of the product ferroaluminosilicate, in weight%, was:

| | |
|---|---|
| $SiO_2$ | 84.7 |
| $Al_2O_3$ | 0.54 |
| $Fe_2O_3$ | 1.07 |
| $Na_2O$ | 0.66 |
| N | 1.01 |
| Ash | 90.1 |
| $SiO_2/(Al_2O_3+Fe_2O_3)$, molar | 118 |
| $Fe_2O_3/(Al_2O_3+Fe_2O_3)$, molar | 0.558 |

The sorption capacities, in g/100 g of calcine product zeolite at 25°C, were as follows:

| | |
|---|---|
| Cyclohexane, 20 Torr | 7.5 |
| n-Hexane, 20 Torr | 6.5 |
| Water, 12 Torr | 3.6 |

TABLE 2

| Degrees two theta | Interplanar d-spacing (Å) | Relative intensity, $I/I_o$ |
|---|---|---|
| 7.41 | 11.93 | 25 |
| 7.61 | 11.61 | 16 |
| 8.85 | 9.99 | 14 |
| 14.43 | 6.14 | 1 |
| 14.75 | 6.00 | 2 |
| 15.16 | 5.84 | 2 |
| 18.66 | 4.75 | 15 |
| 18.89 | 4.70 | 8 |
| 19.16 | 4.63 | 6 |
| 20.01 | 4.44 | 4 |
| 20.88 | 4.25 | 100 |
| 21.31 | 4.17 | 5 |
| 21.81 | 4.07 | 5 |
| 22.34 | 3.98 | 12 |
| 22.89 | 3.89 | 46 |
| 23.19 | 3.84 | 39 |
| 23.79 | 3.74 | 4 |
| 24.40 | 3.65 | 4 |
| 25.18 | 3.54 | 8 |
| 25.75 | 3.46 | 25 |
| 26.18 | 3.40 | 18 |
| 26.84 | 3.32 | 16 |
| 27.93 | 3.19 | 10 |
| 28.45 | 3.14 | 3 |
| 29.24 | 3.05 | 8 |
| 30.87 | 2.896 | 11 |
| 31.70 | 2.823 | 2 |
| 32.82 | 2.729 | 2 |
| 33.67 | 2.662 | 4 |
| 34.23 | 2.620 | 2 |
| 35.54 | 2.597 | 4 |
| 35.68 | 2.516 | 18 |
| 36.54 | 2.459 | 4 |
| 36.86 | 2.438 | 7 |
| 37.68 | 2.387 | 2 |
| 38.42 | 2.343 | 6 |
| 39.11 | 2.303 | 2 |
| 39.65 | 2.273 | 2 |
| 40.96 | 2.204 | 2 |
| 41.62 | 2.170 | 1 |
| 42.54 | 2.125 | 1 |
| 42.84 | 2.111 | 1 |
| 43.72 | 2.071 | 3 |
| 44.42 | 2.040 | 8 |
| 45.43 | 1.997 | 4 |
| 46.10 | 1.969 | 1 |
| 46.74 | 1.944 | 6 |
| 47.41 | 1.918 | 2 |
| 47.89 | 1.900 | 3 |
| 49.26 | 1.850 | 2 |
| 49.82 | 1.830 | 2 |
| 50.42 | 1.810 | 4 |
| 51.08 | 1.788 | 4 |

Example 2

Ten grams of the zeolite product of Example 1 were calcined in a tube furnace in a nitrogen stream to 200°C. At this temperature, ammonia was added in the ratio of $1NH_3/1N_2$ with a flow rate of 50 $cm^3$/minute for each gas. Heating was continued to reach 600°C in 1 hour. The sample was held at this temperature for 1 hour and then allowed to come to ambient temperature in $NH_3/N_2$ atmosphere. The resulting material was slurried with 500 ml of 0.1N ammonium chloride/1N ammonium hydroxide solution and agitated for two

hours at ambient temperature. This treatment was repeated for a total of 3 exchanges and followed up with one exchange at 180°C for 2.5 hours. The exchange solid was filtered, washed with 0.1 N $NH_4OH$ and dried at room temperature.

The chemical composition of the product exchanged solid was, in wt.%:

| | |
|---|---|
| $SiO_2$ (by diff) | 92.88 |
| $Al_2O_3$ | 0.57 |
| $Fe_2O_3$ | 1.24 |
| $Na_2O$ | 0.01 |
| N | 0.41 |
| Ash | 94.7 |
| $SiO_2/(Al_2O_3+Fe_2O_3)$, molar | 106 |
| $Fe_2O_3/(Al_2O_3+Fe_2O_3)$, molar | 0.53 |
| N/(Al+Fe), atomic | 1.00 |
| Na/(Al+Fe), atomic | 0.01 |
| (N+Na)/(Al+Fe), atomic | 1.01 |

Example 3

The reaction mixture for this example was similar to that of Example 1, except that 3.0 grams of ferric nitrate and 10.7 grams of 50% sodium hydroxide solution were used. The product obtained after heating the reaction mixture at 160°C in a Teflon-lined autoclave for 88 hours had the X-ray diffraction pattern shown in Table 3, hereafter, and crystallinity was 90% compared with the iron-free reference sample. The reaction mixture for this example had the following composition:

| | |
|---|---|
| $SiO_2/Al_2O_3$ | 269 |
| $SiO_2/Fe_2O_3$ | 188 |
| Q/(Q+M) | 0.38 |
| (Q+M)/(Al+Fe) | 17.2 |
| $H_2O/OH^-$ | 91 |
| $OH^-/SiO_2$ | 0.16 |

The chemical composition of the product ferroaluminosilicate, in weight%, was:

| | |
|---|---|
| $SiO_2$ | 82.4 |
| $Al_2O_3$ | 0.53 |
| $Fe_2O_3$ | 1.43 |
| $Na_2O$ | 0.59 |
| N | 1.03 |
| Ash | 89.3 |
| $SiO_2/(Al_2O_3+Fe_2O_3)$, molar | 97.2 |
| $Fe_2O_3/(Al_2O_3+Fe_2O_3)$, molar | 0.632 |

The sorption capacities, in g/100 g of calcined (538°C, 3 hours, air) product zeolite at 25°C, were as follows:

| | |
|---|---|
| Cyclohexane, 20 Torr | 7.6 |
| n-Hexane, 20 Torr | 7.0 |
| Water, 12 Torr | 4.2 |

TABLE 3

| Degrees two theta | Interplanar d-spacing (Å) | Relative intensity, $I/I_o$ |
|---|---|---|
| 7.42 | 11.92 | 23 |
| 7.56 | 11.69 | 16 |
| 8.81 | 10.03 | 13 |
| 14.72 | 6.02 | 2 |
| 15.18 | 5.84 | 2 |
| 18.60 | 4.77 | 12 |
| 19.11 | 4.64 | 7 |
| 19.96 | 4.45 | 4 |
| 20.89 | 4.25 | 100 |
| 21.28 | 4.17 | 5 |
| 21.77 | 4.08 | 5 |
| 22.35 | 3.98 | 11 |
| 22.90 | 3.88 | 44 |
| 23.20 | 3.83 | 36 |
| 23.74 | 3.75 | 4 |
| 24.32 | 3.66 | 3 |
| 25.12 | 3.54 | 8 |
| 25.7 | 3.46 | 22 |
| 26.20 | 3.40 | 16 |
| 26.76 | 3.33 | 16 |
| 27.86 | 3.20 | 8 |
| 28.44 | 3.14 | 3 |
| 29.19 | 3.06 | 8 |
| 30.81 | 2.903 | 10 |
| 31.64 | 2.828 | 2 |
| 32.81 | 2.730 | 2 |
| 33.66 | 2.663 | 4 |
| 34.21 | 2.621 | 2 |
| 34.55 | 2.596 | 3 |
| 35.67 | 2.517 | 18 |
| 36.47 | 2.464 | 4 |
| 36.82 | 2.441 | 6 |
| 37.70 | 2.386 | 1 |
| 38.39 | 2.345 | 6 |
| 39.09 | 2.305 | 2 |
| 39.62 | 2.275 | 2 |
| 40.89 | 2.207 | 2 |
| 41.70 | 2.166 | 1 |
| 42.47 | 2.129 | 1 |
| 42.84 | 2.111 | 1 |
| 43.67 | 2.073 | 2 |
| 44.39 | 2.041 | 7 |
| 45.41 | 1.997 | 3 |
| 46.10 | 1.969 | 1 |
| 46.73 | 1.944 | 5 |
| 47.34 | 1.920 | 2 |
| 47.84 | 1.902 | 3 |
| 49.27 | 1.850 | 1 |
| 49.81 | 1.831 | 1 |
| 50.40 | 1.811 | 2 |
| 51.03 | 1.790 | 3 |

Example 4

A quantity of the zeolite product of Example 3 was calcined and exchanged as in Example 2. Its Alpha Value was found to be 22. The corresponding aluminosilicate zeolite ZSM-12 should exhibit an Alpha Value of 35 based upon the $SiO_2/Al_2O_3$ mole ratio.

Example 5

A 1.1 gram quantity of ferric nitrate, $Fe(NO_3)_3$ $9H_2O$, was dissolved in 158.6 grams of water. Methyltriethylammonium chloride solution of 50% concentration, 25.0 grams, followed by 9.6 grams of

50% NaOH, was added. Finally, 48.0 grams of Hi-Sil (90%) was blended in. The mixture was heated at 160°C for crystallization. The reaction mixture composition was:

| | |
|---|---|
| $SiO_2/Al_2O_3$ | 269 |
| $SiO_2/Fe_2O_3$ | 511 |
| Q/(Q+M) | 0.41 |
| (Q+M)/(Al+Fe) | 25.6 |
| $H_2O/OH^-$ | 90 |
| $OH^-/SiO_2$ | 0.16 |

After 121 hours at 160°C, the formed solid was separated by filtration and washed chloride-free. The white crystalline ferroaluminosilicate product gave the X-ray diffraction pattern shown in Table 4 and had 105% crystallinity compared with a reference sample of aluminosilicate ZSM-12.

The product zeolite had the following sorption capacities, g/100 g of solid:

| | |
|---|---|
| Cyclohexane, 20 Torr | 7.9 |
| n-Hexane, 20 Torr | 6.8 |
| Water, 12 Torr | 8.4 |

The product zeolite had the following chemical composition in weight%:

| | |
|---|---|
| $SiO_2$ (by diff) | 87.1 |
| $Al_2O_3$ | 0.65 |
| $Na_2O$ | 0.81 |
| $Fe_2O_3$ | 0.74 |
| N | 1.00 |
| Ash | 89.3 |
| $SiO_2/(Al_2O_3+Fe_2O_3)$, molar | 125 |
| $Fe_2O_3/(Al_2O_3+Fe_2O_3)$, molar | 0.42 |

TABLE 4

| Degrees two Theta | Interplanar d-Spacing (Å) | Relative Intensity, $I/I_o$ |
|---|---|---|
| 7.42 | 11.91 | m |
| 7.56 | 11.69 | m |
| 8.80 | 10.05 | m |
| 14.72 | 6.02 | w |
| 15.12 | 5.86 | w |
| 18.60 | 4.77 | w |
| 18.76 | 4.73 | w |
| 19.08 | 4.65 | w |
| 20.00 | 4.44 | w |
| 20.90 | 4.25 | vs |
| 21.76 | 4.08 | w |
| 22.30 | 3.99 | w |
| 22.87 | 3.89 | s |
| 23.18 | 3.84 | m |
| 23.70 | 3.75 | w |
| 24.36 | 3.65 | w |
| 25.10 | 3.55 | w |
| 25.70 | 3.47 | m |
| 26.18 | 3.40 | w |
| 26.78 | 3.33 | w |
| 27.90 | 3.20 | w |
| 29.16 | 3.06 | w |
| 30.75 | 2.907 | w |
| 33.66 | 2.662 | w |
| 34.16 | 2.625 | w |
| 34.56 | 2.595 | w |
| 35.64 | 2.519 | w |
| 36.56 | 2.458 | w |
| 36.84 | 2.440 | w |
| 38.38 | 2.345 | w |
| 43.74 | 2.069 | w |
| 44.34 | 2.043 | w |
| 45.40 | 1.997 | w |
| 46.74 | 1.943 | w |

Example 6

Recognizing that if the iron of the product zeolite of the present invention, e.g. Example 5, is located in the zeolite framework, it will contribute to ion-exchange capacity of the zeolite, this experiment was conducted. Five grams of the product of Example 5 were heated in a tube furnace in a dry nitrogen stream to 200°C. Ammonia was added to the gas stream and the temperature raised to 600°C. The sample was held at this temperature for one hour, then cooled down, still in a nitrogen-ammonia atmosphere.

The product was exchanged with three batches of 225 ml of a solution of 0.1 N $NH_4Cl$/1 N $NH_4OH$ at 70°C in a sealed polypropylene jar for one hour each. The solid was filtered, washed chloride-free with 0.1 N $NH_4OH$ and dried at ambient temperature. The product had the following chemical composition in weight%:

| | |
|---|---|
| $SiO_2$ (by diff.) | 91.58 |
| $Al_2O_3$ | 0.73 |
| $Fe_2O_3$ | 0.79 |
| Na | less than 0.01 |
| N | 0.41 |
| Ash | 93.1 |
| $SiO_2/(Al_2O_3+Fe_2O_3)$, molar | 126 |
| $Fe_2O_3/(Al_2O_3+Fe_2O_3)$, molar | 0.41 |
| N/(Al+Fe), atomic | 1.21 |

Neither the $SiO_2/Al_2O_3+Fe_2O_3)$ nor the $Fe_2O_3/(Al_2O_3+Fe_2O_3)$ molar ratios changed significantly by the procedure of this example, indicating that all $Al_2O_3$ and $Fe_2O_3$ was retained during the ion-exchange.

Example 7

A quantity of the ferroaluminosilicate product of Example 6 was subjected to the Alpha Test and found to exhibit an Alpha Value of 33. The corresponding aluminosilicate ZSM-12 should have an Alpha Value of 54 based upon $SiO_2/Al_2O_3$ mole ratio.

Example 8

In order to demonstrate that ion-exchange capacity is greater for the ferroaluminosilicate product of the present invention than that contributed solely by the aluminum species therein, the following experiment was conducted. Three grams of the Example 6 product were exchanged with three batches of 135 ml of 0.1 N NaCl at 70°C for one hour each. The solid was filtered, washed $Cl^-$ free with water and dried at ambient temperature. The product had the following chemical composition in weight%:

| | |
|---|---|
| $SiO_2$ (by diff.) | 90.65 |
| $Al_2O_3$ | 0.73 |
| $Fe_2O_3$ | 0.81 |
| $Na_2O$ | 1.01 |
| N | 0.06 |
| Ash | 93.2 |
| $SiO_2/(Al_2O_3+Fe_2O_3)$, molar | 124 |
| $Fe_2O_3/(Al_2O_3+Fe_2O_3)$, molar | 0.42 |
| Na/(Al+Fe), atomic | 0.99 |
| N/(Al+Fe), atomic | 0.18 |
| (Na+N)/(Al+Fe), atomic | 1.17 |

In this back-exchange experiment with NaCl, the molar ratios of $SiO_2/(Al_2O_3+Fe_2O_3)$ and $Fe_2O_3/(Al_2O_3+Fe_2O_3)$ remained constant. Whereas the product of Example 6 contained no significant amount of sodium, the sodium ion exchange yielded a product with a Na/(Al+Fe) atomic ratio of very close to unity, the theoretical value. The 0.06% residual nitrogen represents occluded non-ionic organic material, presumably a decomposition product of methyltriethylammonium ion. If this nitrogen is subtracted from the total nitrogen found in the product of Example, 5 a N/(Al+Fe) atomic ratio of close to 1.0 is obtained for $NH_4^+$/(Al+Fe).

The results prove that 1 cation equivalent per equivalent of (Al+Fe) in the framework is exchangeable and that, therefore, iron has assumed the role of aluminum in the zeolite structure.

Example 9

Ferric sulfate, $Fe_2(SO_4)_3 \cdot 7.1\ H_2O$, 1.5 grams was dissolved in 50 grams of water. Triethylmethylammonium chloride solution of 50% concentration, 35.5 grams, followed by a solution of 2.65 grams of sodium hydroxide in 90 grams of water, was added. Finally, a mixture of 38.2 grams of silica sol (30% $SiO_2$) and 40 grams of water was added with vigorous stirring. The reaction mixture had a pH of 13.17. After aging 24 hours at 50°C, the pH was 11.40. It was adjusted to 13.0 by adding 4.5 grams of 50% NaOH. The reaction mixture was then heated to 160°C for crystallization. The reaction mixture had the following composition:

| | |
|---|---|
| $SiO_2/Al_2O_3$ | 5100 |
| $SiO_2/Fe_2O_3$ | 67.2 |
| Q/(Q+M) | 0.49 |
| (Q+M)/(Al+Fe) | 41.8 |
| $H_2O/OH^-$ | 122 |
| $OH^-/SiO_2$ | 0.54 |

After 419 hours at 160°C, the solid product was filtered and washed with water. X-ray diffraction showed the pattern detailed in Table 5. The product was 90% crystalline compared with a standard aluminosilicate ZSM-12.

The product zeolite had the following sorption capacities in g/100 g:

| | |
|---|---|
| Cyclohexane, 20 Torr: | 6.6 |
| n-Hexane, 20 Torr: | 7.5 |
| Water, 12 Torr: | 8.6 |

The chemical composition was:

| | |
|---|---|
| $SiO_2$, wt.% | 83.0 |
| $Al_2O_3$, ppm | 1145 |
| $Na_2O$, wt.% | 0.57 |
| $Fe_2O_3$, wt.% | 5.29 |
| C, wt.% | 6.0 |
| N, wt.% | 0.92 |
| Ash, wt.% | 89.3 |
| $SiO_2/(Al_2O_3+Fe_2O_3)$, molar | 40.5 |
| $Fe_2O_3/(Al_2O_3+Fe_2O_3)$, molar | 0.967 |

After precalcination and ammonium exchange it was found that N/(Al+Fe) was 0.615 and Na/(Al+Fe) was 0.044, indicating that about two thirds of the iron was in framework positions. The calcined form of this material gave an Alpha Value of 5.

TABLE 5

| Degrees two Theta | Interplanar d-Spacing (Å) | Relative Intensity, I/I° |
|---|---|---|
| 7.46 | 11.85 | 20 |
| 8.77 | 10.08 | 12 |
| 12.11 | 7.31 | 1 |
| 14.67 | 6.04 | 2 |
| 15.20 | 5.83 | 2 |
| 18.64 | 4.76 | 15 |
| 19.01 | 4.67 | 10 |
| 19.88 | 4.47 | 6 |
| 20.80 | 4.27 | 100 |
| 21.73 | 4.09 | 7 |
| 22.31 | 3.98 | 13 |
| 22.84 | 3.89 | 47 |
| 23.15 | 3.84 | 37 |
| 23.73 | 3.75 | 6 |
| 24.30 | 3.66 | 5 |
| 25.06 | 3.55 | 9 |
| 25.72 | 3.46 | 22 |
| 26.14 | 3.41 | 20 |
| 26.70 | 3.34 | 18 |
| 27.82 | 3.21 | 11 |
| 28.35 | 3.15 | 5 |
| 29.11 | 3.07 | 8 |
| 30.75 | 2.908 | 10 |
| 31.59 | 2.832 | 3 |
| 32.67 | 2.741 | 3 |
| 33.59 | 2.668 | 5 |
| 34.45 | 2.603 | 5 |
| 35.45 | 2.532 | 18 |
| 36.28 | 2.476 | 5 |
| 36.75 | 2.446 | 7 |
| 38.31 | 2.350 | 7 |
| 38.94 | 2.313 | 2 |
| 39.59 | 2.276 | 2 |
| 40.86 | 2.208 | 2 |
| 41.72 | 2.165 | 1 |
| 42.30 | 2.137 | 2 |
| 42.71 | 2.117 | 2 |
| 43.61 | 2.075 | 3 |
| 44.30 | 2.045 | 8 |
| 45.35 | 2.000 | 4 |
| 46.57 | 1.950 | 6 |
| 47.72 | 1.906 | 3 |
| 49.18 | 1.853 | 2 |
| 49.71 | 1.834 | 2 |
| 50.35 | 1.812 | 4 |
| 50.98 | 1.791 | 4 |

Example 10

In this example, the reaction mixture was the same as that of Example 9, except that the NaOH used in Example 9 to adjust pH after aging was included in the initial mixture for a total of 4.9 grams NaOH. The pH after aging as in Example 9 was 11.65. After 297 hours at 170°C the product was filtered and washed. X-ray diffraction gave the pattern of Table 6 and the ferroaluminosilicate had 90% crystallinity compared with the standard.

The product zeolite had the following composition:

| | |
|---|---|
| $SiO_2$, wt.% | 83.4 |
| $Al_2O_3$, ppm | 650 |
| $Na_2O$, wt.% | 0.53 |
| $Fe_2O_3$, wt.% | 4.86 |
| N, wt.% | 0.89 |
| Ash, wt.% | 90.2 |
| $SiO_2/(Al_2O_3+Fe_2O_3)$, molar | 44.8 |
| $Fe_2O_3/(Al_2O_3+Fe_2O_3)$, molar | 0.979 |

TABLE 6

| Degrees two theta | Interplanar d-spacing (Å) | Relative intensity, $I/I_o$ |
|---|---|---|
| 7.39 | 11.96 | 22 |
| 7.58 | 11.67 | 18 |
| 8.77 | 10.09 | 13 |
| 14.67 | 6.04 | 2 |
| 15.13 | 5.86 | 3 |
| 18.61 | 4.77 | 15 |
| 19.02 | 4.67 | 8 |
| 19.91 | 4.46 | 5 |
| 20.79 | 4.27 | 100 |
| 21.27 | 4.18 | 5 |
| 21.73 | 4.09 | 7 |
| 22.30 | 3.99 | 11 |
| 22.83 | 3.89 | 47 |
| 23.13 | 3.84 | 42 |
| 23.71 | 3.75 | 6 |
| 24.35 | 3.66 | 5 |
| 25.02 | 3.56 | 7 |
| 25.65 | 3.47 | 24 |
| 26.13 | 3.41 | 18 |
| 26.74 | 3.33 | 17 |
| 27.81 | 3.21 | 10 |
| 28.33 | 3.15 | 3 |
| 29.15 | 3.06 | 9 |
| 30.81 | 2.902 | 11 |
| 31.61 | 2.830 | 2 |
| 32.80 | 2.731 | 2 |
| 33.59 | 2.668 | 5 |
| 34.45 | 2.603 | 4 |
| 35.50 | 2.529 | 19 |
| 36.34 | 2.472 | 4 |
| 36.79 | 2.443 | 6 |
| 37.56 | 2.395 | 2 |
| 38.36 | 2.347 | 7 |
| 39.00 | 2.309 | 2 |
| 39.59 | 2.277 | 2 |
| 40.85 | 2.209 | 2 |
| 41.66 | 2.168 | 1 |
| 42.59 | 2.123 | 2 |
| 43.62 | 2.075 | 3 |
| 44.31 | 2.044 | 8 |
| 45.41 | 1.997 | 4 |
| 46.59 | 1.950 | 6 |
| 47.36 | 1.920 | 3 |
| 47.73 | 1.905 | 3 |
| 49.23 | 1.851 | 2 |
| 49.69 | 1.835 | 2 |
| 50.35 | 1.812 | 4 |
| 50.96 | 1.792 | 4 |

Example 11

The reaction mixture for this example was prepared by dissolving 1.5 grams of $Fe_2(SO_4)_3 \cdot 7.1H_2O$ in 100 grams of water, adding, in this order, 35.5 grams of a 50% triethylmethylammonium chloride solution, a solution of 4.5 grams of $Na_2HPO_4$ in 30 grams of water, a solution of 2.65 grams of NaOH in 10 grams of water and, finally, a mixture of 38.2 grams of silica sol (30% $SiO_2$) and 40 grams of water. The pH was adjusted to 12.5 by adding 0.2 grams of 50% NaOH.

The reaction mixture was then aged for 24 hours at 50°C. The pH after aging was 11.18; it was readjusted to 12.5 by addition of 3.7 grams of 50% NaOH. The reaction mixture had the following composition:

| | |
|---|---|
| $SiO_2/Al_2O_3$ | 5100 |
| $SiO_2/Fe_2O_3$ | 67.2 |
| Q/(Q+M) | 0.40 |
| (Q+M)/(Al+Fe) | 91.9 |

The mixture was then heated to 160°C for crystallization. After 227 hours at this temperature, the reaction was terminated, the solid was separated from the mother liquor by filtration, washed with water and dried at room temperature.

X-ray diffraction showed the results as detailed in Table 7. The zeolite product had 70% crystallinity relative to a reference sample. The sorption capacities were, in g/100 g of solid:

| | |
|---|---|
| Cyclohexane, 20 Torr | 6.9 |
| n-Hexane 20 Torr | 6.7 |
| Water, 12 Torr | 9.9 |

The composition of product on ignited weight basis proved to be:

| | |
|---|---|
| $SiO_2$ | 91.5% |
| $Al_2O_3$ | 0.10% |
| $Fe_2O_3$ | 6.3% |
| $Na_2O$ | 1.41% |
| $SiO_2/(Al_2O_3+Fe_2O_3)$, molar | 39 |
| $Fe_2O_3/(Al_2O_3+Fe_2O_3)$, molar | 0.975 |

TABLE 7

| Degrees two theta | Interplanar d-spacing (Å) | Relative intensity, $I/I_o$ |
|---|---|---|
| 7.51 | 11.77 | 21 |
| 8.82 | 10.03 | 15 |
| 12.19 | 7.26 | 2 |
| 14.75 | 6.00 | 3 |
| 15.20 | 5.83 | 4 |
| 18.62 | 4.76 | 10 |
| 19.05 | 4.66 | 10 |
| 19.96 | 4.45 | 7 |
| 20.84 | 4.26 | 100 |
| 21.80 | 4.08 | 7 |
| 22.35 | 3.98 | 14 |
| 22.94 | 3.88 | 43 |
| 23.25 | 3.83 | 36 |
| 24.44 | 3.64 | 5 |
| 25.11 | 3.55 | 11 |
| 25.68 | 3.47 | 25 |
| 26.22 | 3.40 | 29 |
| 26.79 | 3.33 | 21 |
| 27.89 | 3.20 | 10 |
| 28.47 | 3.14 | 4 |
| 29.26 | 3.05 | 7 |
| 30.83 | 2.901 | 9 |
| 31.64 | 2.828 | 1 |
| 32.84 | 2.727 | 1 |
| 33.74 | 2.657 | 4 |
| 34.44 | 2.605 | 3 |
| 35.63 | 2.520 | 22 |
| 36.43 | 2.466 | 3 |
| 36.93 | 2.434 | 3 |
| 37.71 | 2.386 | 1 |
| 38.41 | 2.344 | 4 |
| 39.65 | 2.273 | 2 |
| 41.03 | 2.201 | 1 |
| 41.86 | 2.158 | 1 |
| 42.92 | 2.107 | 2 |
| 43.77 | 2.068 | 3 |
| 44.50 | 2.036 | 7 |
| 45.44 | 1.996 | 4 |
| 46.71 | 1.945 | 5 |
| 47.82 | 1.902 | 3 |
| 49.39 | 1.845 | 3 |
| 50.52 | 1.807 | 4 |
| 51.15 | 1.786 | 5 |

Example 12

Ferric nitrate nonahydrate, 1.65 grams, was dissolved in 8 grams of water. A 50% methyltriethylammonium chloride solution, 27.5 grams, and a solution of 3.75 grams of sodium hydroxide in 100 grams of water were added. Finally, a blend of 28.65 grams of Ludox LS (silica sol, 30% $SiO_2$) and 31.35 grams of water was added. The reaction mixture was aged at 50°C for 24 hours and then heated at 170°C for crystallization.

The composition of the reaction mixture was:

| | |
|---|---|
| $SiO_2/Al_2O_3$ | 5038 |
| $SiO_2/Fe_2O_3$ | 70 |
| Q/(Q+M) | 0.50 |
| (Q+M)/(Al+Fe) | 44.1 |
| $H_2/OH^-$ | 172 |
| $OH^-/SiO_2$ | 0.55 |

A crystalline product was obtained after 230 hours at 170°C. The product ferroaluminosilicate zeolite X-ray diffraction pattern is given in Table 8.

TABLE 8

| Degrees two theta | Interplanar d-spacing (Å) | Relative intensity, $I/I_o$ |
|---|---|---|
| 7.42 | 11.92 | 30 |
| 7.59 | 11.65 | 25 |
| 8.74 | 10.12 | 15 |
| 14.75 | 6.00 | 4 |
| 15.20 | 5.83 | 4 |
| 18.60 | 4.77 | 10 |
| 19.05 | 4.66 | 10 |
| 19.95 | 4.45 | 6 |
| 20.85 | 4.26 | 100 |
| 21.79 | 4.08 | 6 |
| 22.32 | 3.98 | 12 |
| 22.91 | 3.88 | 42 |
| 23.26 | 3.82 | 35 |
| 23.80 | 3.74 | 5 |
| 24.37 | 3.65 | 5 |
| 25.14 | 3.54 | 9 |
| 25.69 | 3.47 | 22 |
| 26.23 | 3.40 | 20 |
| 26.77 | 3.33 | 17 |
| 27.89 | 3.20 | 9 |
| 28.45 | 3.14 | 4 |
| 29.20 | 3.06 | 6 |
| 30.83 | 2.900 | 8 |
| 31.72 | 2.821 | 1 |
| 32.84 | 2.727 | 2 |
| 33.71 | 2.659 | 5 |
| 34.52 | 2.598 | 4 |
| 35.61 | 2.522 | 21 |
| 36.47 | 2.464 | 4 |
| 36.93 | 2.434 | 5 |
| 37.64 | 2.390 | 2 |
| 38.47 | 2.340 | 5 |
| 39.68 | 2.272 | 1 |
| 40.99 | 2.202 | 1 |
| 41.86 | 2.158 | 1 |
| 42.84 | 2.111 | 1 |
| 43.71 | 2.071 | 2 |
| 44.53 | 2.035 | 7 |
| 45.46 | 1.995 | 2 |
| 46.72 | 1.944 | 4 |
| 47.82 | 1.902 | 2 |
| 49.44 | 1.844 | 2 |
| 49.95 | 1.826 | 2 |
| 50.48 | 1.808 | 3 |
| 51.20 | 1.784 | 4 |

The product of this Example 12 had the following chemical composition:

| | |
|---|---|
| $SiO_2$, wt.% | 82.9 |
| $Al_2O_3$, ppm | 775 |
| $Fe_2O_3$, wt.% | 5.14 |
| $Na_2O$, wt.% | 0.50 |
| N, wt.% | 0.83 |
| Ash, wt.% | 89.4 |
| $SiO_2/(Al_2O_3+Fe_2O_3)$, molar | 42.0 |
| $Fe_2O_3/(Al_2O_3+Fe_2O_3)$, molar | 0.977 |

Example 13

A temperature-programmed ammonia desorption (TPAD) test was conducted on product samples from Examples 4 and 6 as well as an aluminosilicate ZSM-12 with the following results (Table 9) confirming the conclusion that a new type of acid site is unexpectedly formed by the present acid strength-tailoring method.

TABLE 9

| | Example product | | Aluminosilicate ZSM-12 |
|---|---|---|---|
| | 4 | 6 | |
| TPAD peak, °C | 330 | 360 | 375 |
| Width at half-height, °C | 150 | 120 | 120 |
| Alpha value found | 22 | 33 | 76 |
| Alpha value expected | 35 | 45 | 70 |

(from the $SiO_2/Al_2O_3$ mole ratio)

This evidence leads to the unexpected result that, at the conditions noted hereinbefore for TPAD testing, the acid strength-tailored zeolite of the present invention will exhibit a TPAD peak of less than about 370°C, and depending on the Fe/(Fe+Al) atomic ratio of the zeolite, a TPAD peak of from greater than about 310°C to less than about 370°C. Further, at the TPAD test conditions noted hereinbefore, the acid strength-tailored zeolite of the present invention will exhibit a TPAD half-height width of less than about 160°C, and depending on the Fe/(Fe+Al) atomic ratio of the zeolite, a TPAD half-height width of from about 120°C to less than about 160°C.

**Claims**

1. A method for synthesizing a synthetic crystalline siliceous molecular sieve material containing both aluminum and iron in its anionic framework, which method comprises

preparing a mixture containing a source of organic cations, a source of silicon, a deliberately-added source of aluminum, a source of iron, a source of alkali metal or alkaline earth metal ions and water, said mixture having a composition, in terms of mole ratios of oxides and ions, within the following ranges:

| | |
|---|---|
| $OH^-/SiO_2$ | 0.05—0.7 |
| $H_2O/OH^-$ | 50—250 |
| $SiO_2/Al_2O_3$ | 30—50,000 |
| $SiO_2/Fe_2O_3$ | 30—3,000 |
| Q/(Q+M) | 0.2—0.9 |
| (Q+M)/(Al+Fe) | 10—150 |

wherein Q represents organic cations and M represents alkali metal or alkaline earth metal ions,

maintaining said mixture until crystalline siliceous molecular sieve material is formed at a temperature of from 100°C to 200°C for a time of from 30 hours to 40 days, and

recovering from said mixture crystalline siliceous molecular sieve material which is characterized by the following x-ray diffraction pattern:

| Interplanar d-spacing (Å) | Relative intensity, $I/I_o$ |
|---|---|
| 11.9±0.2 | m |
| 10.1±0.2 | m |
| 4.76±0.1 | w |
| 4.26±0.08 | vs |
| 3.98±0.08 | w |
| 3.89±0.07 | s |
| 3.47±0.07 | m |
| 3.40±0.07 | m |
| 3.20±0.06 | w |
| 3.06±0.05 | w |
| 2.52±0.03 | w |

and by a composition on an anhydrous basis and in terms of moles of oxides per mole of silica expressed by the formula:

$$a\ R_{2/n}O:b\ Fe_2O_3:c\ Al_2O_3:SiO_2$$

wherein R is at least one cation having the valence n and

$a=(1.0\pm0.2)(b+c)$
$b=0.0005—0.05$, and
$c=0.00003—0.02$;

said molecular sieve material further exhibiting, when in the ammonium form, a temperature-programmed ammonia desorption peak of from greater than 310°C to less than 370°C and a temperature-programmed ammonia desorption peak half-height width of from 120°C to less than 160°C.

2. The method of Claim 1 wherein said mixture has a composition, in terms of mole ratios of oxides and ions, within the following ranges:

| | |
|---|---|
| $OH^-/SiO_2$ | 0.1—0.6 |
| $H_2O/OH^-$ | 70—200 |
| $SiO_2/Al_2O_3$ | 40—30,000 |
| $SiO_2/Fe_2O_3$ | 40—2,000 |
| Q/(Q+M) | 0.3—0.8 |
| (Q+M)/(Al+Fe) | 15—100 |

and wherein the molar ratio of $SiO_2$ to $Al_2O_3$ in the recovered crystalline molecular sieve material is less than 600.

3. The method of Claim 1 or Claim 2 which comprises the additional step of heating said recovered crystalline material at a temperature of from 370°C to 1100°C.

4. The method of any of Claims 1 to 3 which comprises the additional step of replacing original cations of the recovered crystalline material, at least in part, with a cation or a mixture of cations selected from hydrogen and hydrogen precursors, rare earth metals, or metal of Groups IA, IIA, IIIA, IVA, IB, IIB, IIIB, IVB, VIB or VIIII of the Periodic Table of Elements.

5. The method of any of Claims 1 to 4 wherein the source of organic cations is a quaternary alkylammonium compound.

6. A synthetic crystalline siliceous molecular sieve material containing both aluminum and iron in its anionic framework, said crystalline molecular sieve material being characterized by the following x-ray diffraction pattern:

| Interplanar d-spacing (Å) | Relative intensity, $I/I_o$ |
|---|---|
| 11.9±0.2 | m |
| 10.1±0.2 | m |
| 4.76±0.1 | w |
| 4.26±0.08 | vs |
| 3.98±0.08 | w |
| 3.89±0.07 | s |
| 3.47±0.07 | m |
| 3.40±0.07 | m |
| 3.20±0.06 | w |
| 3.06±0.05 | w |
| 2.52±0.03 | w |

and by having a composition on an anhydrous basis and in terms of mole of oxides per mole of silica expressed by the formula:

$$a\ R_{2/n}O:b\ Fe_2O_3:c\ Al_2O_3:SiO_2$$

wherein R is at least one cation having the valence n, and

$a=(1.0\pm0.2)(b+c)$
$b=0.0005—0.05$, and
$c=0.00003—0.02$;

said molecular sieve material further exhibiting, when in the ammonium form, a temperature-programmed ammonia desorption peak of from greater than 310°C to less than 370°C and a temperature-programmed ammonia desorption peak half-height width from 120°C to less than 160°C.

7. The crystalline molecular sieve material of Claim 6 wherein the molar ratio of $SiO_2$ to $Al_2O_3$ therein is less than 600.

8. The crystalline material of Claim 6 or Claim 7 wherein R is a cation or a mixture of cations selected from hydrogen and hydrogen precursors, rare earth metals, or metals of groups IA, IIA, IIIA, IVA, IB, IIB, IIIB, IVB, VIB or VIII of the Periodic Table of elements.

9. A catalyst composition comprising

A) from 1 percent to 90 percent by weight of a crystalline molecular sieve material prepared in accordance with the method of any Claims 1 to 5; and

B) from 10 percent to 99 percent by weight of an inorganic oxide matrix material.

10. Use of crystalline molecular sieve material prepared in accordance with the method of any of Claims 1 to 5 as a catalyst for the conversion of organic compounds.

**Patentansprüche**

1. Syntheseverfahren für ein synthetisches kristallines silizium-haltiges Molekularsiebmaterial, das in seinem anionischen Gitter sowohl Aluminium als auch Eisen enthält, wobei dieses Verfahren umfast Herstellung einer Mischung die eine Quelle organischer Kationen, eine Siliziumquelle, eine langsam zugesetzte Aluminiumquelle, eine Eisenquelle, eine Quelle von Alkalimetall- oder Erdalkalimetallionen und Wasser enthält, wobei diese Mischung eine Zusammensetzung in Bezug auf die Molverhältnisse der Oxide und Ionen innerhalb der folgenden Bereiche aufweist:

| | |
|---|---|
| $OH^-/SiO_2$ | 0.05—0,7 |
| $H_2O/OH^-$ | 50—250 |
| $SiO_2/Al_2O_3$ | 30—50 000 |
| $SiO_2/Fe_2O_3$ | 30—3 000 |
| Q/(Q+M) | 0,2—0,9 |
| (Q+M)/(Al+Fe) | 10—150 |

worin Q organische Kationen darstellt und M Alkalimetall- oder Erdalkalimetallionen darstellt, Halten dieser Mischung bei einer Temperatur von 100°C bis 200°C während eines Zeitraumes von 30 Stunden bis 40 Tagen, bis das kristalline siliziumhaltige Molekularsiebmaterial gebildet ist, und Gewinnung des kristallinen siliziumhaltigen Molekularsiebmaterials aus dieser Mischung, das durch das folgende Röntgenbeugungsmuster:

| d-Netzebenen-abstand (Å) | Relative intensität $I/I_o$ |
|---|---|
| 11,9+0,2 | mittel |
| 10,1+0,2 | mittel |
| 4,76+0,1 | schwach |
| 4,26+0,08 | sehr stark |
| 3,98+0,08 | schwach |
| 3,89+0,07 | stark |
| 3,47+0,07 | mittel |
| 3,40+0,07 | mittel |
| 3,20+0,06 | schwach |
| 3,06+0,05 | schwach |
| 2,52+0,03 | schwach |

und durch eine Zusammensetzung auf wasserfreier Basis und auf die Mole der Oxide pro Mol Siliziumdioxid bezogen gekennzeichnet ist, die durch die Formel ausgedrückt wird:

$$a\ R_{2/n}O:b\ Fe_2O_3:c\ Al_2O_3:SiO_2$$

worin R zumindest ein Kation mit der Wertigkeit n ist und

a=(1.0+0.2) (b+c)
b=0.0005—0.05, und
c=0.00003—0.02;

wobei diese Molekularsiebmaterial, wenn es in der Ammoniumform vorliegt, darüber hinaus einen durch die Temperatur programmierten Desorptionspeak für Ammoniak von größer als 310°C bis kleiner als 370°C und eine Halbwertsbreite des durch die Temperatur programmierten Dessorptionspeak für Ammoniak von 170°C bis kleiner als 160°C aufweist.

2. Verfahren nach Anspruch 1, worin die Mischung eine Zusammensetzung bezogen auf die Molverhältnisse der Oxide und Ionen innerhalb der folgenden Bereich aufweist:

| | |
|---|---|
| $OH^-/SiO_2$ | 0,1—0,6 |
| $H_2O/OH^-$ | 70—200 |
| $SiO_2/Al_2O_3$ | 40—30 000 |
| $SiO_2/Fe_2O_3$ | 40—2 000 |
| $Q/(Q+M)$ | 0,3—0,8 |
| $(Q+M)/(Al+Fe)$ | 15—100 |

und worin das Molverhältnis von $SiO_2$ zu $Al_2O_3$ im gewonnenen kristallinen Molekularsiebmaterial kleiner als 600 ist.

3. Verfahren nach Anspruch 1 oder 2, welches den zusätzlichen Schritt der Erwärmung des gewonnenen kristallinen Materials bei einer Temperatur von 370°C bis 1100°C umfaßt.

4. Verfahren nach einem der Ansprüche 1 bis 3 welches den zusätzlichen Schritt des Austausches der ursprünglichen Kationen des gewonnenen kristallinen Materials zumindest teilweise mit einem Kation oder einer Mischung von Kationen umfaßt, die aus Wasserstoff und Wasserstoffvorstufen, Metallen der Seltenen Erden oder Metallen der Gruppen IA, IIA, IIIA, IVA, IB, IIB, IIIB, IVB, VIB, oder VIII des Periodensystems der Elemente ausgewählt sind.

5. Verfahren nach einem der Ansprüche 1 bis 4, worin die Quelle der organischen Kationnen eine quaternäre Alkylammoniumverbindung ist.

6. Synthetisches kristallines siliziumhaltiges Molekularsiebmaterial, das in seinem anionischen Gitter sowohl Aluminium als auch Eisen enthält, wobei diese kristalline Molekularsiebmaterial durch das folgende Röntgenbeugungsmuster:

| d-Netzebenen-abstand (Å) | Relative intensität $I/I_o$ |
|---|---|
| 11,9+0,2 | mittel |
| 10,1+0,2 | mittel |
| 4,76+0,1 | schwach |
| 4,26+0,08 | sehr stark |
| 3,98+0,08 | schwach |
| 3,89+0,07 | stark |
| 3,47+0,07 | mittel |
| 3,40+0,07 | mittel |
| 3,20+0,06 | schwach |
| 3,06+0,05 | schwach |
| 3,52+0,03 | schwach |

und durch eine Zusammensetzung auf wasserfreier Basis und auf die Mole der Oxide pro Mol Siliziumdioxid bezogen gekennzeichnet ist, die durch die folgende Formel ausgedrückt wird:

$$a\ R_{2/n}O:b\ Fe_2O_3:c\ Al_2O_3:\ SiO_2$$

worin R mindestens ein Kation mit der Wertigkeit n ist und

$a=(1,0+0,2)\ (b+c)$
$b=0,0005—0,05$, und
$c=0,00003—0,02$;

worin dieses Molekularsiebmaterial, wenn es in der Ammoniumform vorliegt, darüber hinaus einen durch die Temperatur programmierten Desorptionspeak für Ammoniak von größer als 310°C bis kleiner als 370°C und eine Halbwertsbreite des durch die Temperatur programmierten Desorptiospeak für Ammoniak von 120°C bis weniger als 160°C aufweist.

7. Kristallines Molekularsiebmaterial nach Anspruch 6, worin das Molverhältnis von $SiO_2$ zu $Al_2O_3$ kleiner als 600 ist.

8. Kristallines Material nach Anspruch 6 oder Anspruch 7, worin R ein Kation oder eine Kationenmischung ist, die aus Wasserstoff und Wasserstoffvorstufen, Metallen der Seltenen Erden oder Metallen der Gruppen IA, IIA, IIIA, IVA, IB, IIB, IIIB, IVB, VIB oder VIII des Periodensystems der Elemente ausgewählt sind.

9. Katalysatorzusammensetzung, welche umfaßt:

A) von 1 Gew.% bis 90 Gew.% eines nach einem Verfahren nach einem der Ansprüche 1 bis 5 hergestellten kristallinen Molekularsiebmaterials und

B) von 10 Gew.% bis 99 Gew.-% eines Matrixmaterials eines anorganischen Oxides.

10. Verwendung des entsprechend des Verfahrens nach einem der Ansprüche 1 bis 5 hergestellten kristallinen Molekularsiebmaterials als Katalysator für die Umwandlung organischer Verbindungen.

**Revendications**

1. Un procédé de synthèse d'un tamis moléculaire siliceux cristallin synthétique contenant à la fois de l'aluminium et du fer dans son édifice anionique, ce procédé consistant à:—

préparer un mélange contenant une source de cations organiques, une source de silicium, une source d'aluminium délibérément ajoutée, une source de fer, une source d'ions de métal alcalin ou de métal alcalino-terreux et de l'eau, ce mélange présentant une composition, en termes de rapports molaires d'oxydes et d'ions, comprise dans les intervalles suivants:

| | |
|---|---|
| $OH^-/SiO_2$ | 0,05—0,7 |
| $H_2O/OH^-$ | 50—250 |
| $SiO_2/Al_2O_3$ | 30—50 000 |
| $SiO_2/Fe_2O_3$ | 30—3 000 |
| Q/(Q+M) | 0,2—0,9 |
| (Q+M)/(Al+Fe) | 10—150 |

dans laquelle:

Q représente des cations organiques; et

M représente des ions de métal alcalin ou de métal alcalino-terreux,

à maintenir ce mélange, jusqu'à ce que se forme un tamis moléculaire siliceux cristalline, à une température de 100°C à 200°C pendant un temps de 30 heures à 40 jours, et

à récupérer dans ce mélange un tamis moléculaire siliceux cristallin caractérisé par le schéma suivant de diffraction aux rayons X:

| Espacement interplanaire d(Å) | Intensité relative, $I/I_o$ |
|---|---|
| 11,9±0,2 | m |
| 10,1±0,2 | m |
| 4,76±0,1 | w |
| 4,26±0,08 | vs |
| 3,98±0,08 | w |
| 3,89±0,07 | s |
| 3,47±0,07 | m |
| 3,40±0,07 | m |
| 3,20±0,06 | w |
| 3,06±0,05 | w |
| 2,52±0,03 | w |

et par une composition, sur une base anhydre et en termes de moles d'oxydes par mole de silice, exprimée par la formule:

$$a\ R_{2/n}O/b\ Fe_2O_3/c\ Al_2O_3/SiO_2$$

dans laquelle:

R représente au moins un cations de valeur n; et

a=(1,0±0,2)(b+c)

b=0,0005—0,05; et

c=0,00003—0,02;

ce tamis moléculaire présentant en outre, sous sa forme ammoniée, un pic de désorption d'ammoniac programmée par la température supérieur à 310°C mais inférieur à 370°C et une largeur à mi-hauteur du pic de désorption d'ammoniac programmée par la température supérieure à 120°C mais inférieure à 160°C.

2. Le procédé selon la revendication 1, dans lequel ce mélange présente une composition en termes de rapports molaires d'oxydes et d'ions, comprise dans les intervalles suivants:

| | |
|---|---|
| $OH^-/SiO_2$ | 0,1—0,6 |
| $H_2O/OH^-$ | 70—200 |
| $SiO_2/Al_2O_3$ | 40—30 000 |
| $SiO_2/Fe_2O_3$ | 50—2 000 |
| Q/(Q+M) | 0,3—0,8 |
| (Q+M)/(Al+Fe) | 15—100 |

et dans laquelle le rapport molaire de $SiO_2/Al_2O_3$ dans le tamis moléculaire cristallin récupére est inférieur à 600.

3. Le procédé selon la revendication 1 ou la revendication 2, qui comprend l'étape additionelle consistant à chauffer ce matériau cristallin récupérée à une température comprise entre 370°C et 1 100°C.

4. Le procédé selon l'une quelconque des revendications 1 à 3, comprend l'étape supplémentaire consistant à remplacer les cations initiaux du matériau cristallin récupéré, au moins en partie, par un cation ou un mélange de cations choisis parmi l'hydrogène et les précurseurs d'hydrogène, les métaux des terres rares ou les métaux des groupes IA, IIA, IIIA, IVA, IB IIB, IIIB, IVB, VIB ou VIII de la Classification Périodique des Eléments.

5. Le procédé selon l'une quelconque des revendications 1 à 4, dans lequel la source de cations organiques et un dérivée d'alkylammonium quaternaire.

6. Un tamis moléculaire siliceux cristallin synthétique contenant à la fois de l'aluminium et du fer dans son édifice anionique, ce tamis moléculaire cristallin étant caractérisé par le schéma suivant de diffraction aux rayons X:

| Espacement interplanaire d(Å) | Intensité relative, $I/I_o$ |
|---|---|
| 11,9±0,2 | m |
| 10,1±0,2 | m |
| 4,76±0,1 | w |
| 4,26±0,08 | vs |
| 3,98±0,08 | w |
| 3,89±0,07 | s |
| 3,47±0,07 | m |
| 3,40±0,07 | m |
| 3,20±0,06 | w |
| 3,06±0,05 | w |
| 2,52±0,03 | w |

et en ce qu'il présente une composition, sur une base anhydre et en termes de moles d'oxydes par mole de silice, exprimée par la formule:

$$a\ R_{2/n}O/b\ Fe_2O_3/c\ Al_2O_3/SiO_2$$

dans laquelle:

R représente au moins un cation de valence n; et

a=(1,0±0,2)(b+c)

b=0,0005—0,05; et

c=0,00003—0,2;

ce tamis moléculaire présentant en outre, sous la forme ammoniée, un pic de désorption d'ammoniac programmée par la température supérieur à 310°C mais inférieur à 370°C et un largeur à demi-hauteur du pic de désorption d'ammoniac programmée par la température supérieure à 120°C mais inférieure à 160°C.

7. Le tamis moléculaire cristallin selon la revendication 6, dans lequel le rapport molaire de $SiO_2/Al_2O_3$ est inférieure à 600.

8. Le matériau cristallin selon la revendication 6 ou la revendication 7, dans lequel R représente un cation ou un mélange de cations choisis parmi l'hydrogène et les précurseurs d'hydrogène, les métaux des terres rares ou les métaux des groupes IA, IIA, IIIA, IVA, IB, IIB, IIIB, IVB, VIB ou VIII de la Classification Périodique des Eléments.

9. Une composition de catalyseur comprenant:

A) de 1% à 90% en poids d'un tamis moléculaire cristallin préparé en accord avec le procédé selon l'une quelconque des revendications 1 à 5; et

B) de 10% à 99% en poids d'une matrice constituée par un oxyde minéral.

10. Utilisation du tamis moléculaire cristallin préparé en acord avec le procédé selon l'une quelconque des revendications 1 à 5, comme catalyseur destiné à la conversion de dérivés organiques.